# EUROPÄISCHE PATENTSCHRIFT

(11) **EP 2 839 987 B1**
(45) Veröffentlichungstag und Bekanntmachung des Hinweises auf die Patenterteilung: **18.07.2018**
(21) Anmeldenummer: 14002765.7
(22) Anmeldetag: 07.08.2014
(51) Int. Cl.: B60N 2/80

(54) **Tragstangenbügel, Kopfstütze und Verfahren zur Montage**
Support rod bracket, headrest and method for mounting
Étrier de barre porte-cintres, appuie-tête et procédé de montage

(30) Priorität: 22.08.2013 DE 102013013815
(43) Veröffentlichungstag der Anmeldung: 25.02.2015
(73) Patentinhaber: GRAMMER AG, 92224 Amberg (DE)
(72) Erfinder: Grönninger, Reinhold, 93142 Maxhütte-Haidhof (DE); Klar, Bernhard, 92256 Hahnbach (DE); Ries, Willibald, 92272 Freudenberg (DE)
(74) Vertreter: Roche, von Westernhagen & Ehresmann

(56) Entgegenhaltungen:
- WO-A1-97/45290
- DE-A1- 10 149 455
- DE-A1-102007 031 612
- DE-A1-102010 061 308

## Beschreibung

Gemäß einem ersten Aspekt betrifft die Erfindung einen Tragstangenbügel für eine Kopfstütze für Fahrzeugsitze. Eine erste Tragstange und eine zweite Tragstange bilden mit einer Traverse den Tragstangenbügel.

Ein solcher Tragstangenbügel ist aus offenkundiger Vorbenutzung bekannt.

Es war Aufgabe der Erfindung, den Tragstangenbügel derart auszubilden, dass er eine einfache Montage ermöglicht. Insbesondere soll durch die Montage des Tragstangenbügels auch eine einfache Montage der Kopfstütze möglich sein.

Die Aufgabe wird gelöst durch einen Tragstangenbügel mit den Merkmalen des Anspruchs 6.

Die Traverse ist mittels einer ersten Befestigung an der ersten Tragstange und mittels einer zweiten Befestigung an der zweiten Tragstange befestigt. Die Befestigung kann z.B. jede formschlüssige, kraftschlüssige oder stoffschlüssige Verbindung sein, wie z.B. eine Nietverbindung oder eine Schweißverbindung.

Wenigstens eine der Befestigungen, die erste Befestigung und / oder die zweite Befestigung, ist von einer Taumel-Befestigung gebildet. Taumel-Befestigung bedeutet im Sinne der Erfindung, dass die Befestigung durch Taumel-Umformung der Tragstange oder / und der Traverse hergestellt wird.

Das Taumeln, das auch als Taumelnieten oder Radialnieten bezeichnet wird, ist ein Kaltumformverfahren. Bei diesem Verfahren wirkt die Umformkraft zu einem Zeitpunkt nur auf eine Teilfläche des Werkstücks. Durch eine taumelnde Bewegung des Werkzeugs wird erreicht, dass weitere Bereiche des Werkstücks umgeformt werden.

Aufgrund der Taumel-Umformung eines Endbereichs der Traverse fließt das umgeformte Material radial zu einem Zentrum der TaumelBewegung radial nach außen, wodurch ein Niet- oder Schließkopf entsteht. Auf diese Weise wird eine Relativbewegung der Traverse relativ zu der Tragstange in eine erste Richtung verhindert. Die Befestigung kann weitere Mittel umfassen, welche auch eine Bewegung der Traverse relativ zu der Tragstange in eine andere Richtung verhindern. Das können z.B. Formschlussmittel sein. Gemäß einer Alternative oder zusätzlich kann auch wenigstens eine Führung für die Tragstange in dem Kopfkasten vorgesehen sein, welche zusammen mit dem Niet- oder Schließkopf eine Bewegung der Tragstange relativ zu der Traverse in eine zweite Richtung verhindert.

Z.B. weist die Tragstange eine Aussparung auf, welche von dem Endbereich der Traverse durchgriffen ist. Die Taumel-Umformung findet z.B. an dem freien Endbereich statt, welcher auf der Außenseite der Tragstangen aus der Aussparung ragt. Das Werkzeug übt dabei z.B. eine Umformkraft auf die Stirnfläche der Traverse aus.

Z.B. ist ein erster Endbereich der Traverse auf diese Weise mit der ersten Tragstange und ein zweiter Endbereich der Traverse mit der zweiten Tragstange fest verbunden. Gemäß einem zweiten Aspekt betrifft die Erfindung eine durch die technischen Merkmale des Anspruchs 1 definierte Kopfstütze, die an einem Fahrzeugsitz befestigbar ist. Die Kopfstütze umfasst einen Kopfkasten mit einer Kopfanlagefläche. Der Kopfkasten ist an einem Tragstangenbügel gelagert, wobei der Tragstangenbügel an dem Fahrzeugsitz befestigbar ist. Der Kopfkasten ist relativ zu dem Tragstangenbügel zwischen einer oberen Position und einer unteren Position bewegbar. Der Tragstangenbügel umfasst zwei Tragstangen, die mittels einer Traverse miteinander verbunden sind.

Eine solche Kopfstütze ist aus offenkundiger Vorbenutzung bekannt.

Es war Aufgabe der Erfindung, eine Kopfstütze zu schaffen, welche einfach montierbar ist.

Die Aufgabe wird gelöst durch eine Kopfstütze mit den Merkmalen des Anspruchs 1.

Erfindungsgemäß ist der Kopfkasten relativ zu dem Tragstangenbügel zwischen einer unteren Position und einer oberen Position bewegbar. Der Kopfkasten umfasst wenigstens ein Langloch, welches von der Traverse des Tragstangenbügels durchgriffen ist. Die Traverse ist mittels einer Befestigung, wie z.B. Taumel-Umformung, Schweißen oder dgl., an den Tragstangen befestigt. Während der Bewegung zwischen der oberen und der unteren Position bewegt sich die Traverse relativ zu dem Langloch des Kopfkastens. Der Kopfkasten wird durch Zusammenwirken einer Laibung des Langlochs und einer Außenfläche der Traverse an dem Tragstangenbügel geführt.

Der Tragstangenbügel ist gemäß dem anfangs erwähnten ersten Aspekt der Erfindung ausgebildet.

Die Kopfstütze weist gemäß einer Ausgestaltung der Erfindung eine Verriegelungsvorrichtung auf, mittels welcher der Kopfkasten in wenigstens zwei Positionen relativ zu dem Tragstangenbügel verriegelbar ist.

Die Kopfstütze kann z.B. einen Stellantrieb umfassen. Der Stellantrieb umfasst z.B. erste Stellmittel, welche dem Kopfkasten zugeordnet sind und zweite Stellmittel, welche dem Tragstangenbügel zugeordnet sind. Z.B. umfasst der Stellantrieb eine Stelleinrichtung, die relativ zu einem dem Tragstangenbügel zugeordneten Halteteil bewegbar ist. Z.B. weisen die Stelleinrichtung und das Halteteil zusammenwirkende Verzahnungen oder zusammenwirkende Gewinde auf.

Die Stelleinrichtung umfasst z.B. eine Antriebsspindel, welche mit einem Gewinde des Halteelements zusammenwirkt. Die Stelleinrichtung weist z.B. eine Antriebsspindel mit einem Außengewinde auf, die mit einem Innengewinde einer Spindelmutter des Halteelements in Eingriff ist.

Beispielsweise ist der Stellantrieb manuell oder von einem Antriebsmotor bewegbar.

Außerdem betrifft die Erfindung ein Verfahren zur Montage eines Tragstangenbügels einer Kopfstütze für Fahrzeugsitze mit einer ersten Tragstange, einer zweiten Tragstange und einer Traverse.

Es war Aufgabe der Erfindung, ein Verfahren zu schaffen, mit dem eine einfache und flexible Montage der Kopfstütze ermöglicht wird.

Die Aufgabe wurde gelöst mit einem Verfahren mit den Merkmalen des Anspruchs 8.

Die Traverse wird mittels einer ersten Befestigung an der ersten Tragstange und mittels einer zweiten Befestigung an der zweiten Tragstange befestigt.

Wenigstens eine der Befestigungen, die erste Befestigung und / oder die zweite Befestigung ist gemäß einer Ausführungsform von einer Taumel-Befestigung gebildet.

Taumel-Befestigung bedeutet im Sinne der Erfindung, dass die Befestigung durch Taumel-Umformung der Tragstange oder / und der Traverse hergestellt wird.

Bei diesem Verfahren wirkt eine Umformkraft nur auf eine Teilfläche des Werkstücks, was durch eine taumelnde Bewegung des Werkzeugs erreicht wird.

Aufgrund der Taumel-Umformung eines Endbereichs der Traverse und / oder der Tragstange wird dieser vergrößert und dadurch die Traverse an der ersten Tragstange oder der zweiten Tragstange befestigt.

Z.B. weist die Tragstange wenigstens eine Aussparung auf, welche von dem Endbereich der Traverse durchgriffen ist. Alternativ kann z.B. auch die Traverse wenigstens eine Aussparung aufweisen, die von der Tragstange durchgriffen ist. Die Taumel-Umformung findet dann z.B. an dem freien Endbereich statt, welcher auf der Außenseite der Tragstangen oder an der Außenseite der Traverse aus der Aussparung ragt. Das Werkzeug übt dabei z.B. eine Umformkraft auf die Stirnfläche der Traverse bzw. auf eine Stirnfläche der Tragstange aus.

Z.B. ist ein erster Endbereich der Traverse auf diese Weise mit der ersten Tragstange und ein zweiter Endbereich der Traverse mit der zweiten Tragstange fest verbunden.

Des weiteren betrifft die Erfindung ein Verfahren zur Montage der o.g. Kopfstütze.

Es war Aufgabe der Erfindung, ein Verfahren zur Montage einer Kopfstütze zu schaffen, welche mit einem Tragstangenbügel versehen ist, wobei das Verfahren die Montage des Tragstangenbügels bei der Ausbildung unterschiedlicher Ausführungsvarianten der Kopfstütze erlauben soll und mittels welchem die Kopfstütze mit einer hohen Stabilität kostengünstig herstellbar ist.

Die Aufgabe wird gelöst durch ein Verfahren mit den Merkmalen des Anspruchs 11.

Bei dem erfindungsgemäßen Verfahren sind zwei Tragstangen vorgesehen, welche an der Rückenlehne eines Fahrzeugsitzes befestigbar sind. Jede Tragstange wird mit einem Endbereich in eine Führung des Kopfkastens eingesetzt. Eine Traverse wird danach derart in den Kopfkasten eingesetzt, dass sie wenigstens ein Führungs-Langloch des Kopfkastens durchgreift. Anschließend wird die Traverse an einem Endbereich jeder Tragstange befestigt.

Die Traverse kann z.B. mittels einer Taumelnietverbindung an den Tragstangen befestigt werden. Alternativ kommen aber auch andere Fügeverfahren, wie z.B. Schweißen, in Betracht.

Gemäß einer Ausführungsform der Erfindung wird bei dem Verfahrensschritts des Montierens der Traverse an dem Kopfkasten die Traverse durch ein Halteelement geführt, welches an dem Tragstangenbügel befestigt ist. Das Halteelement ist Teil eines Stellantriebs der Kopfstütze. Das Halteelement kann zu diesem Zweck eine Hülse umfassen, durch deren Innenraum die Traverse geführt werden kann.

Weitere Vorteile der Erfindung ergeben sich anhand der nachfolgenden Beschreibung von zwei in den schematischen Figuren dargestellten Ausführungsbeispielen. Es zeigen:
Fig. 1a eine rückwärtige Ansicht der Kopfstütze in einer unteren Position des Kopfkastens, wobei eine hintere Blende aus Gründen der besseren Übersicht nicht dargestellt ist,
Fig. 1b in Anlehnung an Fig. 1a eine rückwärtige Ansicht der Kopfstütze in einer oberen Position des Kopfkastens,
Fig. 2 eine perspektivische Darstellung des Kopfkastens der Kopfstütze,
Fig. 3 eine Explosionsdarstellung des Kopfkastens, der Tragstangen und der Traverse,
Fig. 4a in Anlehnung an Fig. 1 eine Darstellung eines zweiten Ausführungsbeispiels der Kopfstütze in einer unteren Position des Kopfkastens,
Fig. 4b in Anlehnung an Fig. 4a eine Darstellung der Kopfstütze in einer oberen Position des Kopfkastens,
Fig. 5 eine perspektivische Darstellung einer Spindelmutter des Stellantriebs der Kopfstütze,
Fig. 6 eine Ansicht der Spindelmutter,
Fig. 7 eine Ansicht gemäß Ansichtspfeil VII in Fig. 6,
Fig. 8 eine Ansicht gemäß Ansichtspfeil VIII in Fig. 6,
Fig. 9 eine schematische Schnittdarstellung eines Endbereichs der Tragstange sowie der Traverse und eines Werkzeugs vor dem Taumel-Umformen, wobei der Kopfkasten nicht dargestellt ist,
Fig. 10 in Anlehnung an Fig. 9 der Endbereich der Tragstange und der Traverse nach dem Taumel-Umformen.

Eine Kopfstütze insgesamt ist in den Figuren mit dem Bezugszeichen 10 bezeichnet. Gleiche Bezugszeichen in den unterschiedlichen Figuren bezeichnen, auch wenn kleine Buchstaben hinzugefügt oder weggelassen sind, entsprechende Teile.

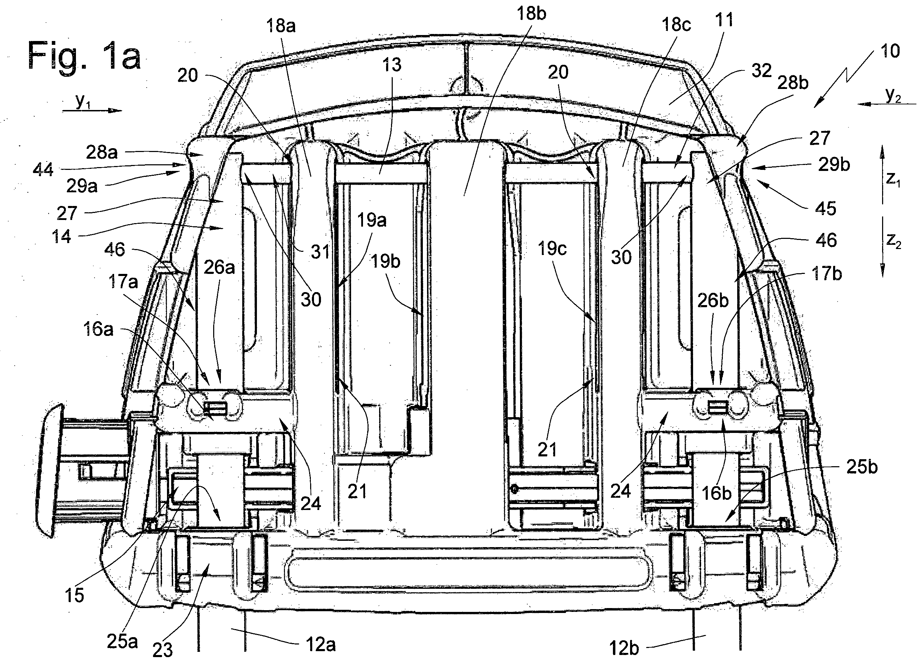

In Fig. 1a ist eine rückwärtige Ansicht der erfindungsgemäßen Kopfstütze 10 dargestellt. Eine hintere Blende ist in Fig. 1a nicht gezeigt.

Die Kopfstütze umfasst einen Kopfkasten 11, welcher auf Tragstangen 12a und 12b gelagert ist, die mittels einer Traverse 13 zu einem Tragstangenbügel 14 verbunden sind. Der Kopfkasten 11 umfasst Führungen 16a und 16b mit denen der Kopfkasten 11 bewegbar auf den Tragstangen 12a und 12b gelagert ist. Die Führungen 16a und 16b bilden einen Führungskanal 17 in dem die Tragstange 12a bzw. 12b bewegbar aufgenommen ist. Der Kopfkasten 11 ist auf diese Weise relativ zu dem Tragstangenbügel 14 in die Richtungen z1 und z2 bewegbar.

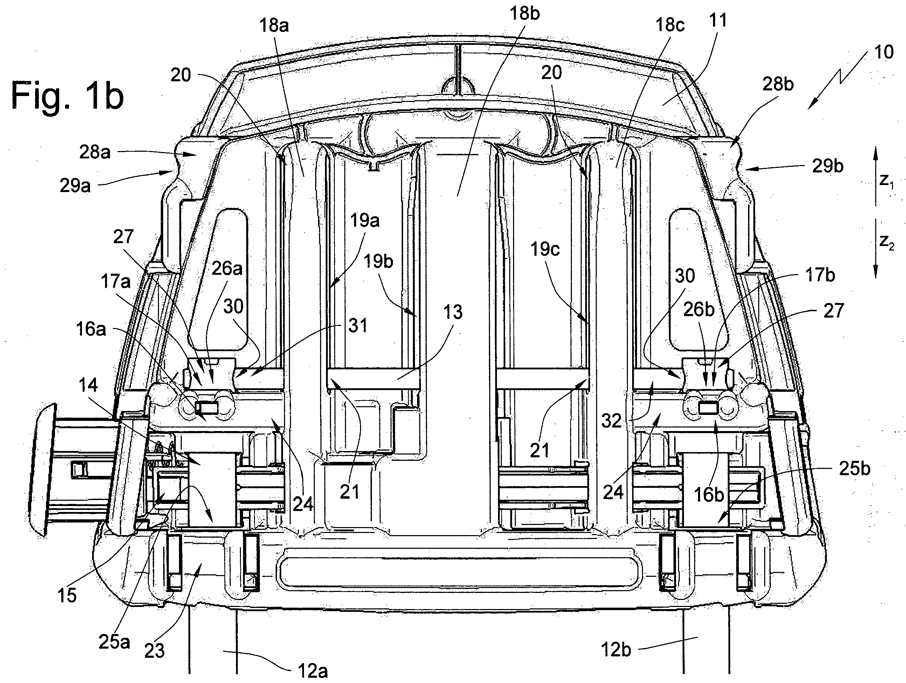

In Fig. 1a ist der Kopfkasten 11 in der unteren Position dargestellt. Aus der unteren Position kann der Kopfkasten 11 in die obere Position bewegt werden, die in Fig. 1b dargestellt ist. Mittels einer Verriegelungsvorrichtung 15 kann der Kopfkasten in der unteren Position, der oberen Position sowie in Zwischenpositionen verriegelt werden.

Der Kopfkasten 11 umfasst Rippen 18a, 18b, 18c. In der Rippe 18a ist ein Langloch 19a, in der Rippe 18b ein Langloch 19b und in der Rippe 18c ist ein Langloch 19c ausgebildet. Die Langlöcher 19a, 19b und 19c sind von der Traverse 13 durchgriffen. Bei der Bewegung des Kopfkastens 11 zwischen der unteren und der oberen Position bewegt sich die Traverse 13 von einem oberen Endbereich 20 des Langlochs 19a, 19b, 19c zu einem unteren Endbereich 21. In der unteren Position des Kopfkastens 11 gemäß Fig. 1a befindet sich die Traverse 13 an dem oberen Endbereich 20. In der oberen Position des Kopfkastens 11 gemäß Fig. 1b befindet sich die Traverse 13 an dem unteren Endbereich 21. Der Kopfkasten 11 ist durch die Aufnahme der Traverse 13 in dem Langloch 19 an der Traverse 13 geführt. Dabei wirken Laibungen 22 der Langlöcher 19a, 19b und 19c mit einer Außenfläche der Traverse 13 zusammen.

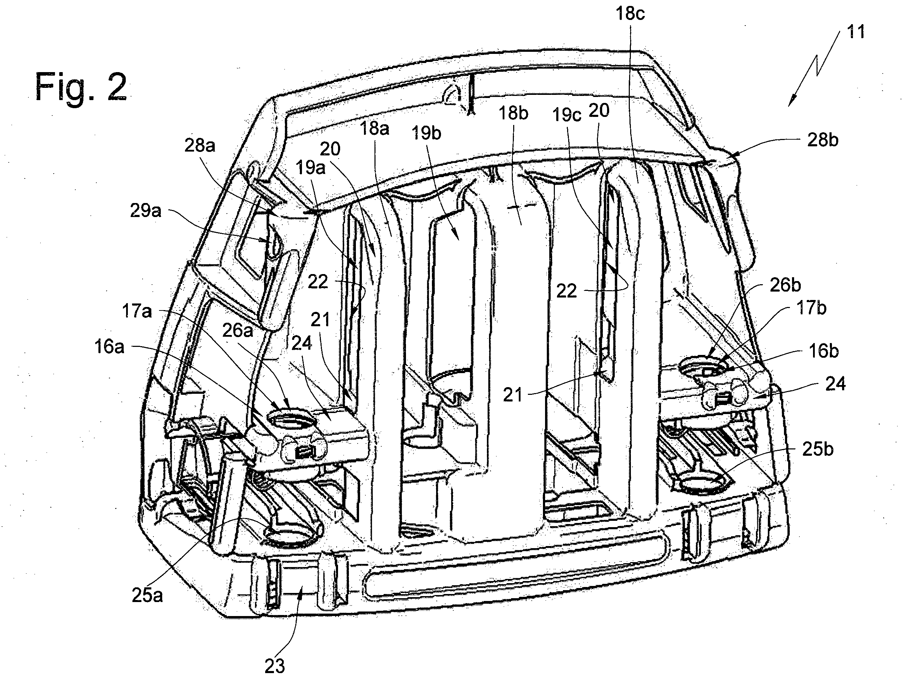

In Fig. 2 ist der Kopfkasten 11 als Einzelteil dargestellt. In Fig. 2 ist zu erkennen, dass der Kopfkasten 11 einen unteren Steg 23 sowie einen oberen Steg 24 aufweist. In dem unteren Steg 23 sind Öffnungen 25a und 25b und in dem oberen Steg 24 sind Öffnungen 26a und 26b ausgebildet. Die Öffnungen 25a und 26a sind Teil der Führung 16a und Teil des Führungskanals 17a. Die Öffnungen 25b und 26b sind Teil der Führung 16b und Teil des Führungskanals 17b. Endbereiche 27 der Tragstangen 12a und 12b sind in Führungs- und Montagesitzen 28a bzw. 28b aufgenommen, wenn sich der Kopfkasten 11 in der unteren Position befindet. Der Führungs- und Montagesitz 28a ist mit einer Öffnung 29a und der Führungs- und Montagesitz 28b ist mit einer Öffnung 29b versehen. Durch die Öffnungen 29a und 29b kann bei der Montage die Traverse 11 hindurchgeführt werden.

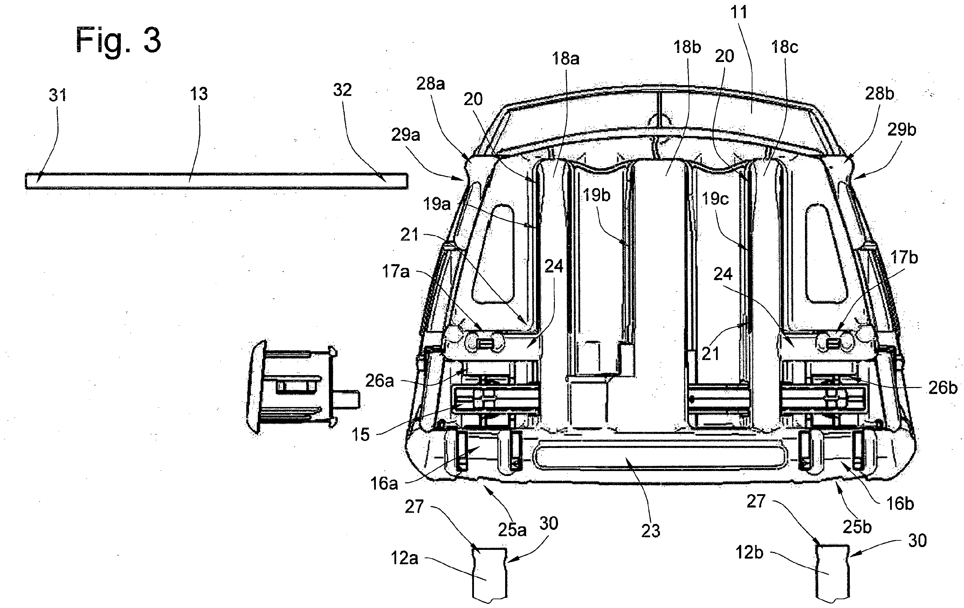

Die Montage der Tragstangen 12a und 12b sowie der Traverse 13 an dem Kopfkasten 11 wird nachfolgend anhand der Fig. 2 und 3 beschrieben.

Gemäß Fig. 3 werden zur Montage die Tragstange 12a durch die Öffnung 25a in den Führungskanal 17a und die Tragstange 12b durch die Öffnung 25b in den Führungskanal 17b eingeführt, bis die Endbereiche 27 jeder Tragstange 12a und 12b in dem entsprechenden Führungs- und Montagesitz 28a bzw. 28b aufgenommen ist. Danach wird die Traverse 13 z.B. durch die Montageöffnung 29a geführt und an den Endbereichen 27 der Tragstangen 12a und 12b befestigt. Die Befestigung kann auf unterschiedliche Weise mit den bekannten Fügeverfahren erfolgen.

Im vorliegenden Ausführungsbeispiel weisen die Endbereiche 27 Bohrungen 30 auf, die z.B. als Durchgangsbohrungen ausgebildet sind. Die Traverse 13 wird derart in den Bohrungen 30 angeordnet, dass sie mit einem ersten Endbereich 31 in der Bohrung 30 der Tragstange 12a und mit einem zweiten Endbereich 32 in der Bohrung 30 der Tragstange 12b aufgenommen ist, und wobei die freien Endbereiche 31 und 32 aus der Aussparung herausragen. Anschließend werden der erste Endbereich 31 an der Tragstange 12a und der zweite Endbereich 32 an der Tragstange 12b durch das Taumelumformverfahren, auch Taumelnietverfahren genannt, befestigt.

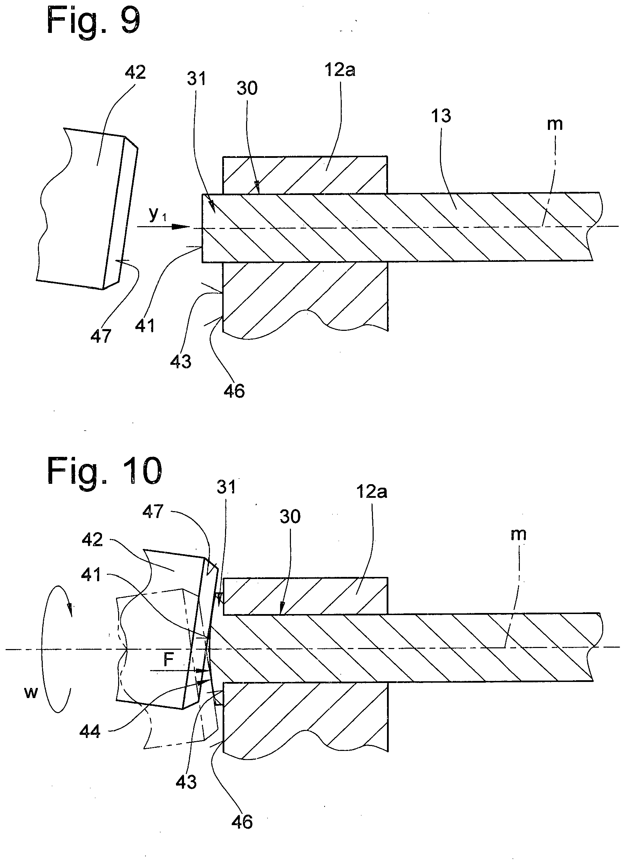

Dieses Verfahren ist in den Fig. 9 und 10 genauer dargestellt. Fig. 9 zeigt den Endbereich 31 sowie die Bohrung 30 in der Tragstange 12a. Der Endbereich 31 ragt auf einer Außenseite 46 der Tragstange 12a aus der Bohrung 30 heraus. Auf eine Stirnfläche 41 des Endbereichs 31 wird durch ein Taumelwerkzeug 42 eine Umformkraft F in Richtung y ausgeübt. Das Taumelwerkzeug 42 dreht um eine Mittelachse m der Traverse 13 in Richtung w und eine Kontaktfläche 47 des Taumelwerkzeugs 42 ist in einem Winkel zur Mittelachse m angeordnet und kontaktiert die Traverse exzentrisch.

Auf diese Weise wird der Werkstoff des Endbereichs 31 derart umgeformt wird, dass er radial zu einer Mittelachse m der Traverse 13 nach außen fließt und sich in einem der Aussparung benachbarten Bereich an eine Außenfläche 43 der Tragstange 12a nach Art eines Nietkopfes oder Schließkopfes anlegt (siehe Fig. 10) und eine Befestigung 44 bildet. Nach dem gleichen Verfahren wird der Endbereich 32 umgeformt und bildet eine Befestigung 45. Die Befestigung 44 auf der Außenseite 46 der Tragstange 12a verhindert eine Bewegung der Traverse 13 in Richtung y1, die Befestigung 45 auf der Außenseite 46 der Tragstange 12b verhindert eine Bewegung der Traverse 13 in Richtung y2. Auf diese Weise wird verhindert, dass sich die Traverse 13 relativ zu den Tragstangen 12a und 12b bewegen kann.

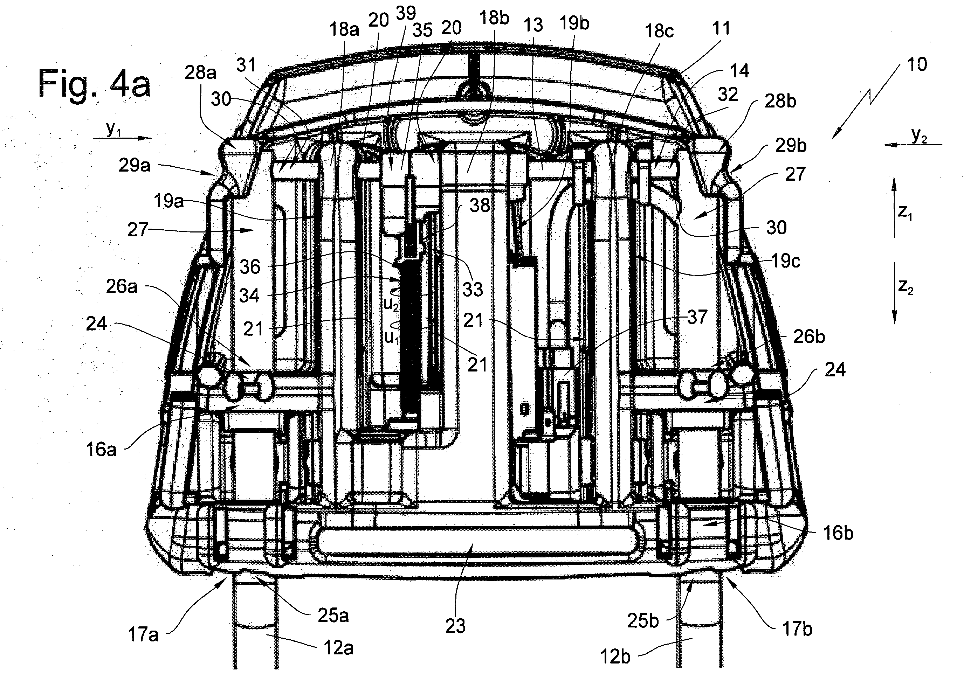

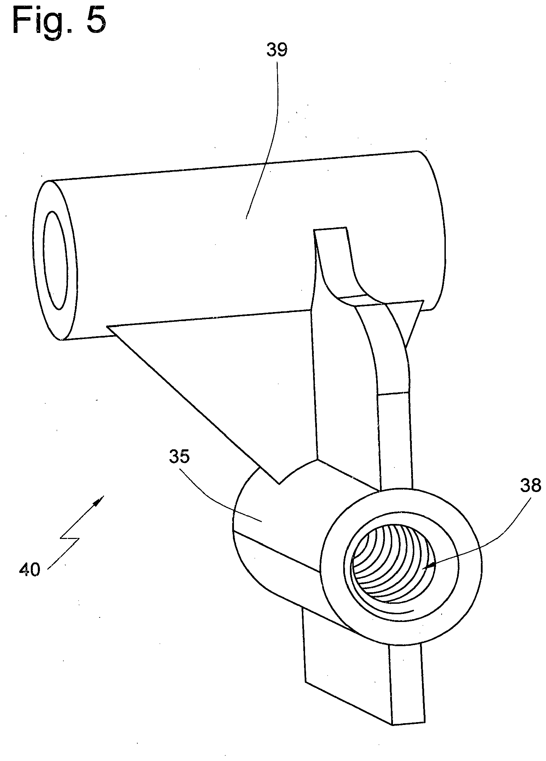

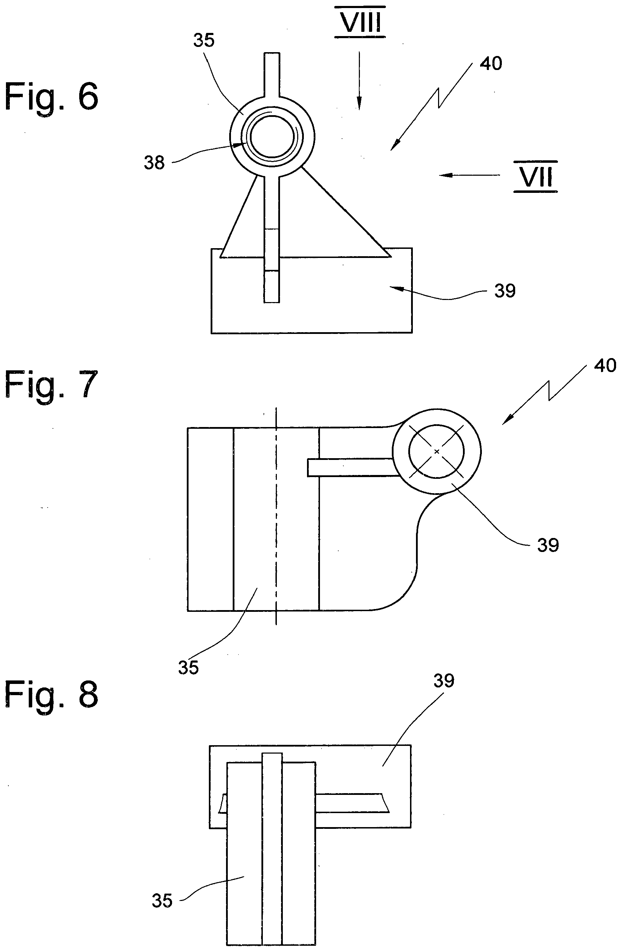

Ein zweites Ausführungsbeispiel ist in den Fig. 4a bis 8 dargestellt. Die Kopfstütze unterscheidet sich von dem ersten Ausführungsbeispiel dadurch, dass ein Stellantrieb 33 vorgesehen ist, mittels welchem der Kopfkasten 11 relativ zu dem Tragstangenbügel 14 in Richtung z1, z2 bewegbar ist. Der Stellantrieb 33 umfasst eine Stelleinrichtung mit einer Spindel 34 mit einem Außengewinde 36, welche von einem Motor 37 in Richtung u1 und u2 antreibbar ist. Ferner umfasst die Stelleinrichtung eine Spindelmutter 35 mit einem Innengewinde 38, die einem Halteteil 40 zugeordnet ist. Die Spindelmutter 35 greift mit ihrem Außengewinde 36 in das Innengewinde 38 der Spindelmutter 35. Das Halteteil 40 umfasst ferner eine Hülse 39, die von der Traverse 13 durchgriffen ist. Die Spindelmutter 35 und die Hülse 39 sind im vorliegenden Ausführungsbeispiel einstückig ausgebildet. Sie könnten gemäß einer alternativen Ausführung auch aneinander befestigt sein.

Die Montage der Kopfstütze 10 unterscheidet sich von dem ersten Ausführungsbeispiel dadurch, dass nachdem die Traverse 13 durch das Langloch 19a der Rippe 18a geführt wurde, die Traverse 13 durch die Hülse 39 der Spindelmutter 35 gefädelt wird. Anschließend wird die Traverse 13 in gleicher Weise, wie bei dem ersten Ausführungsbeispiel durch das Langloch 19b der Rippe 18b und durch das Langloch 19c der Rippe 18c gefädelt und an den Endbereichen 27 der Tragstangen 12a und 12b befestigt.

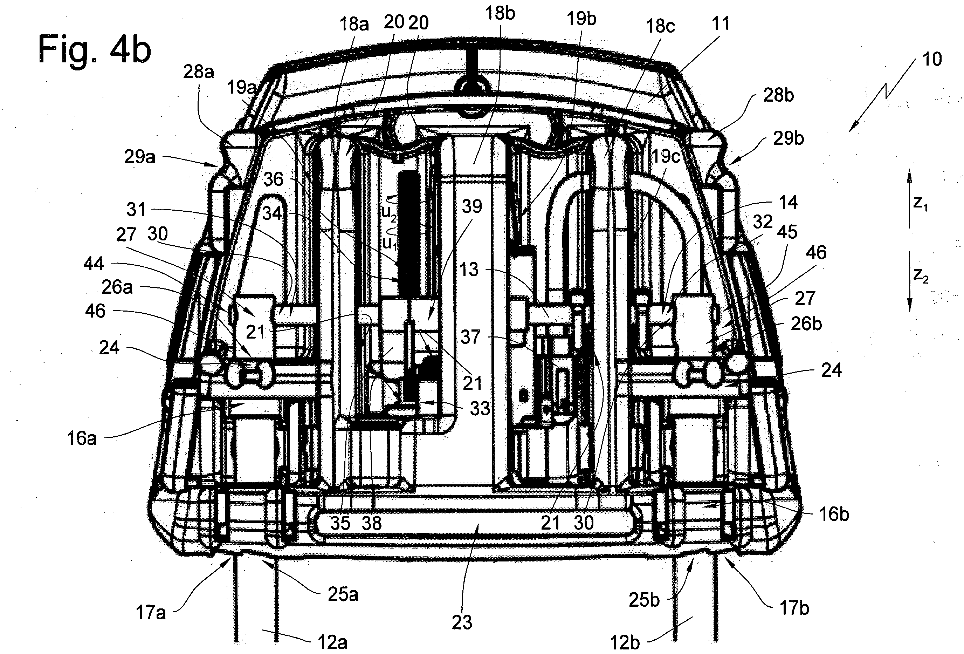

Die Funktion der Kopfstütze 10 ist nachfolgend beschrieben. Soll der Kopfkasten 11 aus der in Fig. 4 gezeigten unteren Position in die nicht dargestellte obere Position verstellt werden, so wird der Stellantrieb 33 mittels einer Betätigungsvorrichtung derart betätigt, dass der Motor 37 die Spindel 34 in Richtung u1 dreht. Die Spindel 34 dreht sich in die Spindelmutter 35 hinein und bewegt sich dabei relativ zu der Spindelmutter 35 in Richtung z1. Weil der Motor 37 und die Spindelmutter 35 an dem Kopfkasten 11 befestigt sind, bewegt sich auch der Kopfkasten 11 relativ zu dem Tragstangenbügel 14 in Richtung z1. Wenn der Kopfkasten 11 in Richtung z2 bewegt werden soll, wird der Motor 37 derart betätigt, dass er die Spindelmutter 35 in Richtung u2 dreht. Dabei dreht sich die Spindel 34 aus der Spindelmutter 35 heraus in Richtung z2, wobei auch der Kopfkasten in Richtung z2 bewegt wird.

Eine Verriegelungsvorrichtung ist bei dem zweiten Ausführungsbeispiel nicht vorgesehen, weil der Stellwiderstand des Antriebsmotors so groß ist, dass der Kopfkasten 11 in der eingestellten Position verbleibt, wenn der Motor 37 nicht betätigt wird.

## Patentansprüche

1. Kopfstütze mit einem Kopfkasten (11), welcher mittels wenigstens einem Tragstangenbügel (14) an der Rückenlehne eines Fahrzeugsitzes befestigbar ist, wobei der Tragstangenbügel (14) zwei Tragstangen (12a, 12b) und eine Traverse (13) umfasst, welche die Tragstangen (12a, 12b) miteinander verbindet und wobei der Kopfkasten (11) relativ zu den Tragstangen (12a, 12b) zwischen einer unteren Position und einer oberen Position bewegbar ist, **dadurch gekennzeichnet, dass** die Traverse (13) wenigstens ein Langloch (19a, 19b, 19c) des Kopfkastens (11) durchgreift, dass der Kopfkasten (11) durch Zusammenwirken einer Laibung (22) des Langlochs (19a, 19b, 19c) und der Traverse (13) bei der Bewegung zwischen der unteren Position und der oberen Position geführt ist und dass Endbereiche (31, 32) der Traverse (13) an Endbereichen (27) der Tragstangen (12a, 12b) befestigt sind.

2. Kopfstütze nach Anspruch 1, **dadurch gekennzeichnet, dass** die Kopfstütze einen Stellantrieb (33) umfasst und dass der Stellantrieb (33) dem Kopfkasten (11) zugeordnete erste Stellmittel (36) sowie dem Tragstangenbügel (14) zugeordnete zweite Stellmittel (38) umfasst, welche relativ zu einem zugeordneten Halteteil (40) bewegbar ist.

3. Kopfstütze nach Anspruch 2, **dadurch gekennzeichnet, dass** die ersten Stellmittel (36) eine Stelleinrichtung (34) umfassen die relativ zu einem Halteteil (40) bewegbar ist, welches von den zweiten Stellmitteln (38) umfasst ist.

4. Kopfstütze nach Anspruch 3, **dadurch gekennzeichnet, dass** die Stelleinrichtung (34) einen Antriebsmotor (37) umfasst, mit welchem die Stelleinrichtung (34) bewegbar ist.

5. Kopfstütze nach einem der Ansprüche 2 bis 4, **dadurch gekennzeichnet, dass** der Stellantrieb (33) eine Antriebsspindel (34) mit einem Außengewinde (36) umfasst, welche mit einem Innengewinde (38) einer Spindelmutter (35) des Halteelements (40) zusammenwirkt.

6. Tragstangenbügel für eine Kopfstütze (10) für Fahrzeugsitze gemäß einem der Ansprüche 1 bis 5, welcher eine erste Tragstange (12a), eine zweite Tragstange (12b) und eine Traverse (13) umfasst, wobei die Traverse (13) mittels einer ersten Befestigung (44) mit der ersten Tragstange (12a) und mittels einer zweiten Befestigung (45) mit der zweiten Tragstange (12b) befestigt ist **dadurch gekennzeichnet, dass** die Traverse (13) dazu geeignet ist, wenigstens ein Langloch (19a, 19b, 19c) des Kopfkastens (11) der Kopfstütze (10) durchzugreifen und durch Zusammenwirken mit einer Laibung (22) des Langlochs (19a, 19b, 19c) bei der Bewegung zwischen der relativ zur Traverse (13) unteren Position und oberen Position des Kopfkastens (11) den Kopfkasten (11) zu führen, und dass wenigstens eine der Befestigungen (44, 45) von einer Taumel-Befestigung gebildet ist.

7. Tragstangenbügel nach Anspruch 6, **dadurch gekennzeichnet, dass** wenigstens eine der Befestigungen (44, 45) derart gebildet ist, dass ein Endbereich (31, 32) der Traverse (13) eine Aussparung (30) in der Tragstange (12a, 12b) durchgreift und die Taumel-Befestigung auf der Außenseite (46) der Tragstange (12a, 12b) ausgebildet ist.

8. Verfahren zur Montage einer Kopfstütze nach einem der vorhergehenden Ansprüche 1 bis 5, welche zur Befestigung der Kopfstütze an der Rückenlehne eines Fahrzeugsitzes mit einem Tragstangenbügel (14) nach Anspruch 6 oder 7 mit wenigstens zwei Tragstangen (12a, 12b) und einer Traverse (13) versehen ist, **dadurch gekennzeichnet, dass** die Traverse (13) derart in den Kopfkasten (11) eingesetzt wird, dass sie wenigstens ein Langloch (19a, 19b, 19c) des Kopfkastens (11) durchgreift, und die Traverse (13) danach mit ihren Endbereichen (31, 32) an einem Endbereich (27) jeder Tragstange (12a, 12b) mittels einer Befestigung (44, 45) befestigt wird.

9. Verfahren zur Montage einer Kopfstütze nach Anspruch 8, **dadurch gekennzeichnet, dass** während des Verfahrensschritts des Montierens der Traverse (13) an dem Kopfkasten (11) die Traverse (13) durch ein Halteelement (40) geführt wird, wobei das Halteelement (40) Teil eines Stellantriebs der Kopfstütze (10) ist.

10. Verfahren zur Montage einer Kopfstütze nach Anspruch 8 oder 9, **dadurch gekennzeichnet, dass** wenigstens eine Befestigung als Taumel-Befestigung hergestellt ist.

11. Verfahren zur Montage eines Tragstangenbügels nach Anspruch 6 oder 7 einer Kopfstütze (10) nach einem der vorhergehenden Ansprüche 1 bis 5, für ein Verfahren nach einem der Ansprüche 9 und 10, wobei der Tragstangenbügel eine erste und eine zweite Tragstange (12a, 12b) sowie eine Traverse (13) umfasst, wobei die Traverse mittels einer ersten Befestigung (44) an der ersten Tragstange (12a) und mittels einer zweiten Befestigung (45) an der zweiten Tragstange (12b) befestigt wird, **dadurch gekennzeichnet, dass** wenigstens eine der Befestigungen (44, 45) von einer Taumel-Befestigung gebildet ist.

12. Verfahren zur Montage eines Tragstangenbügels nach Anspruch 11, **dadurch gekennzeichnet, dass** Wenigstens eine der Befestigungen (44, 45) derart hergestellt ist, dass ein Endbereich (31, 32) der Traverse (13) durch eine Aussparung (30) der Tragstange (12a, 12b) geführt wird und auf einer Außenseite (46) der Tragstange (12a, 12b) mit einer Taumel-Befestigung an der Tragstange (12a, 12b) befestigt wird.

## Claims

1. Headrest having a head box (11) which can be attached to a backrest of a vehicle seat by means of at least one support rod bracket (14), the support rod bracket (14) comprising two support rods (12a, 12b) and a cross-member (13) connecting the support rods (12a, 12b) to one another, and the head box (11) is movable relative to the support rods (12a, 12b) between a lower position and an upper position, **characterised in that** the cross-member (13) extends through at least one slot (19a, 19b, 19c) of the head box (11), the head box (11) is guided due to co-operation of an inner edge (22) of the slot (19a, 19b, 19c) and the cross-member (13) during the movement between the lower position and the upper position, and end regions (31, 32) of the cross-member (13) are attached to end regions (27) of the support rods (12a, 12b).

2. Headrest as claimed in claim 1, **characterised in that** the headrest comprises an actuator drive (33) and the actuator drive (33) comprises first actuating means (36) assigned to the head box (11) and second actuating means (38) assigned to the support rod bracket (14) which is movable relative to an assigned retaining part (40).

3. Headrest as claimed in claim 2, **characterised in that** the first actuating means (36) comprise an actuating device (34) which is movable relative to a retaining part (40) surrounded by the second actuating means (38).

4. Headrest as claimed in claim 3, **characterised in that** the actuating device (34) comprises a drive motor (37) by means of which the actuating device (34) is movable.

5. Headrest as claimed in one of claims 2 to 4, **characterised in that** the actuator drive (33) comprises a drive spindle (34) with an external thread (36) which cooperates with an internal thread (38) of a spindle nut (35) of the retaining element (40).

6. Support rod bracket for a headrest (10) for vehicle seats as claimed in one of claims 1 to 5, comprising a first support rod (12a), a second support rod (12b) and a cross-member (13), and the cross-member (13) is attached to the first support rod (12a) by means of a first fastener (44) and to the second support rod (12b) by means of a second fastener (45), **characterised in that** the cross-member (13) is configured to extend through at least one slot (19a, 19b, 19c) of the head box (11) of the headrest (10) and to guide the head box (11) due to co-operation with an inner edge (22) of the slot (19a, 19b, 19c) during the movement between the lower position and upper position of the head box (11) relative to the cross-member (13) and at least one of the fasteners (44, 45) is a wobble fastener.

7. Support rod bracket as claimed in claim 6, **characterised in that** at least one of the fasteners (44, 45) is configured so that an end region (31, 32) of the cross-member (13) extends through a cut-out (30) in the support rod (12a, 12b) and the wobble fastener is produced on the external face (46) of the support rod (12a, 12b).

8. Method for mounting a headrest as claimed in one of preceding claims 1 to 5, which is provided with a support rod bracket (14) as claimed in claim 6 or 7 having at least two support rods (12a, 12b) and a cross-member (13) for attaching the headrest to the backrest of a vehicle seat, **characterised in that** the cross-member (13) is inserted in the head box (11) in such a way that it extends through at least one slot (19a, 19b, 19c) of the head box (11), and the cross-member (13) is then attached by its end regions (31, 32) to an end region (27) of each support rod (12a, 12b) by means of a fastener (44, 45).

9. Method for mounting a headrest as claimed in claim 8, **characterised in that** the cross-member (13) is guided by a retaining element (40) during the method step of mounting the cross-member (13) on the head box (11) and the retaining element (40) is part of an actuator drive of the headrest (10) .

10. Method for mounting a headrest as claimed in claim 8 or 9, **characterised in that** at least one fastener is produced as a wobble fastener.

11. Method for mounting a support rod bracket as claimed in claim 6 or 7 of a headrest (10) as claimed in one of preceding claims 1 to 5 for a method as claimed in one of claims 9 and 10, wherein the support rod bracket comprises a first and a second support rod (12a, 12b) and a cross-member (13), and the cross-member is attached to the first support rod (12a) by means of a first fastener (44) and to the second support rod (12b) by means of a second fastener (45), **characterised in that** at least one of the fasteners (44, 45) is a wobble fastener.

12. Method for mounting a support rod bracket as claimed in claim 11, **characterised in that** at least one of the fasteners (44, 45) is produced such that an end region (31, 32) of the cross-member (13) is guided by a cut-out (30) of the support rod (12a, 12b) and is attached to the support rod (12a, 12b) on an external face (46) of the support rod (12a, 12b) by means of a wobble fastener.

## Revendications

1. Appui-tête avec un boîtier de tête (11) lequel peut être fixé au moyen au moins d'un étrier de barre porte-cintres (14) au niveau du dossier d'un siège de véhicule, l'étrier de barre porte-cintres (14) comprenant deux tiges de support (12a, 12b) et une barre transversale (13) qui relie ensemble les tiges de support (12a, 12b) et le boitier de tête (11) pouvant être fixé par rapport aux tiges de support (12a, 12b) entre une position basse et une position haute, **caractérisé en ce que** la barre transversale (13) traverse au moins un trou oblong (19a, 19b, 19c) du boitier de tête (11), **en ce que** le boitier de tête (11) est guidé par action conjointe avec une surface intérieure (22) du trou oblong (19a, 19b, 19c) et de la barre transversale (13) lors du mouvement entre la position basse et la position haute, et **en ce que** des extrémités (31, 32) de la barre transversale (13) sont fixées au niveau des extrémités (27) des tiges de support (12a, 12b).

2. Appui-tête selon la revendication 1, **caractérisé en ce que** l'appui-tête comprend un dispositif d'actionnement (33) et **en ce que** le dispositif d'actionnement (33) comprend des premiers moyens de réglage (36) associés au boîtier de tête (11) ainsi que des deuxièmes moyens de réglage (38) associés à l'étrier de barre de porte-cintres (14) qui peut être déplacé par rapport à une pièce de maintien (40) associée.

3. Appui-tête selon la revendication 2, **caractérisé en ce que** les premiers éléments de réglage (36) comprennent un dispositif de réglage (34) qui peut être déplacé par rapport à une pièce de maintien (40) qui est comprise par les deuxièmes moyens de réglage (38).

4. Appui-tête selon la revendication 3, **caractérisé en ce que** le dispositif de réglage (34) comprend un moteur d'entrainement (37) qui permet de déplacer le dispositif de réglage (34).

5. Appui-tête selon l'une des revendications 2 à 4, **caractérisé en ce que** le dispositif d'actionnement (33) comporte une broche d'entrainement (34) avec un filet extérieur (36) qui concoure avec un filet intérieur (38) d'un écrou de broche (35) de la pièce de maintien (40).

6. Etrier de barre de porte-cintres pour un appui-tête (10) pour des sièges de véhicule selon l'une des revendications 1 à 5, qui comprend une première tige de support (12a), une deuxième tige de support (12b) et une barre transversale (13), la barre transversale (13) étant fixée au moyen d'une première fixation (44) avec la première tige de support (12a) et au moyen d'une deuxième fixation (45) avec la deuxième tige de support (12b), **caractérisé en ce que** la barre transversale (13) est apte à traverser au moins un trou oblong (19a, 19b, 19c) du boitier de tête (11) de l'appui-tête (10) et à guider le boitier de tête (11) par action conjointe avec une surface intérieure (22) du trou oblong (19a, 19b, 19c) lors du mouvement entre la position basse par rapport à la barre transversale (13) et la position haute du boitier de tête (11), et **en ce qu'**au moins une des fixations (44, 45) est formée par une fixation flottante.

7. Etrier de barre de porte-cintres selon la revendication 6, **caractérisé en ce qu'**au moins une des fixations (44, 45) est formée de telle sorte qu'une extrémité (31, 32) de la barre transversale (13) traverse un évidement (30) dans la barre de support (12a, 12b) et que la fixation flottante est réalisée sur le côté extérieur (46) de la barre de support (12a, 12b).

8. Procédé pour le montage d'un appui-tête selon l'une des précédentes revendications 1 à 5, qui est muni pour fixation de l'appui-tête au niveau du dossier d'un siège de véhicule d'un étrier de barre de porte-cintres (14) selon la revendication 6 ou 7, avec au moins deux tiges de support (12a, 12b) et d'une barre transversale (13), **caractérisé en ce que** la barre transversale (13) est placée dans le boitier de tête (11) de telle sorte qu'elle traverse au moins un trou oblong (19a, 19b, 19c) du boitier de tête (11) et que la barre transversale (13) est ensuite fixée avec ses extrémités (31, 32) au niveau de l'extrémité (27) de chaque tige de support (12a, 12b) au moyen d'une fixation (44, 45).

9. Procédé pour le montage d'un appui-tête selon la revendication 8, **caractérisé en ce que** pendant l'étape du procédé de montage de la barre transversale (13) au niveau du boitier de tête (11), la barre transversale (13) est guidée par un élément de maintien (40), l'élément de maintien (40) étant partie d'un dispositif d'actionnement de l'appui-tête (10).

10. Procédé pour le montage d'un appui-tête selon la revendication 8 ou 9, **caractérisé en ce qu'**au moins une fixation est fabriquée en tant que fixation flottante.

11. Procédé pour le montage d'un étrier de barre de porte-cintres selon la revendication 6 ou 7 d'un appui-tête (10) selon l'une des précédentes revendications 1 à 5 pour un procédé selon l'une des revendications 9 et 10, l'étrier de barre de porte-cintres comportant une première et une deuxième tiges de support (12a, 12 b), ainsi qu'une barre transversale (13), la barre transversale étant fixée au moyen d'une première fixation (44) au niveau la première tige de support (12a) et au moyen d'une deuxième fixation (45) au niveau de la deuxième tige de support (12b), **caractérisé en ce qu'**au moins une des fixations (44, 45) est formée par une fixation flottante.

12. Procédé pour le montage d'un étrier de barre de porte-cintres selon la revendication 11, **caractérisé en ce qu'**au moins une des fixations (44) est fabriquée de telle sorte qu'une extrémité (31, 32) de la barre transversale (13) est guidée à travers un évidement (30) de la barre transversale (12a, 12b) et est fixée sur un coté extérieur (46) de la tige de support (12a, 12b) avec une fixation flottante au niveau de la tige de support (12a, 12b).
